# EUROPEAN PATENT SPECIFICATION

(11) **EP 1 598 169 B1**
(45) Date of publication and mention of the grant of the patent: **11.04.2012**
(21) Application number: 04708445.4
(22) Date of filing: 05.02.2004
(51) Int. Cl.: B29C 51/36, B68G 7/02, A47C 31/02, B62J 1/12

(54) **EXTERNAL COVERING MATERIAL FOR MOTOR VEHICLE AND MOTOR VEHICLE SEAT**
AUSSENABDECKMATERIAL FÜR KRAFTFAHRZEUG UND KRAFTFAHRZEUGSITZ
MATERIAU COUVRANT EXTERNE DESTINE A UN VEHICULE A MOTEUR ET SIEGE DE VEHICULE A MOTEUR

(30) Priority: 05.02.2003 JP 2003028790; 21.10.2003 JP 2003361297; 17.12.2003 JP 2003419776
(43) Date of publication of application: 23.11.2005
(73) Proprietor: TS Tech Co., Ltd., Asaka-shi, Saitama 351-0012 (JP)
(72) Inventor: HASEGAWA, Kenichi, c/o TS Tech Co., Ltd., Asaka-shi, Saitama 3510012 (JP); CHIBA, Tomohisa, c/o TS Tech Co., Ltd., Asaka-shi, Saitama 3510012 (JP); MURAMATSU, Yoshinori, c/o TS Tech Co., Ltd., Hamakita-shi, Shizuoka 4340025 (JP)
(74) Representative: Grünecker, Kinkeldey, Stockmair & Schwanhäusser
(86) International application number: PCT/JP2004/001178
(87) International publication number: WO 2004/069523

(56) References cited:
- DE-A1- 3 303 913
- JP-A- 9 052 282
- JP-A- 53 022 567
- JP-A- 2001 046 187
- JP-A- 2001 046 187
- JP-A- 2001 341 681
- JP-U- 63 108 398

## Description

### Technical Field

The present invention relates to a skin material for a vehicle seat, and a seat for a vehicle.

### Background Art

In general, a seat of a two-wheel vehicle such as a motorcycle or the like is manufactured by covering a cushion material with a skin material having a weather resistance and fixing an end portion thereof to a lower surface of a bottom plate.

In accordance with the manufacturing method mentioned above, it is possible to easily and efficiently manufacture the seat for the vehicle, however, since there is no seam which is formed in the case that a natural leather is used as a raw material, there is a disadvantage that the high-class feeling of a product is lack. Further, there is desired a seat which has a front surface finished in different pattern and luster and is rich in a design property.

However, in the case that the seam is formed by actually sewing a plurality of skin materials, there is generated a problem that a rain water makes an intrusion from the seam so as to bedew clothes of a passenger with the rain water and deteriorate the cushion material.

Accordingly, there has been proposed a technique of employing a pressing mold to which a seam pattern and a grain pattern are transcribed, transcribing the seam pattern and the grain pattern in the pressing mold to a flat-shaped skin raw material, cutting the flat-shaped skin material to a predetermined size, thereafter forming in a three-dimensional shape and charging the cushion material, thereby forming the seat (for example, refer to Japanese Unexamined Patent Publication No. 2001-46187).

In accordance with the method mentioned above, it is possible to form a one-piece skin material provided with the seam pattern. However, in the prior art mentioned above, the structure is made such that the seat is formed by transcribing a connection pattern and a fine line pattern as the seam pattern portion in the skin material serving as the flat-shaped raw material, thereafter charging the cushion material in accordance with an integral expansion molding or the like to the skin material which is formed in the three-dimensional shape by applying a vacuum molding and a tension molding, and fixing the end portion of the skin material to a bottom outer portion of the bottom plate. Accordingly, there is a case that the seam pattern portion is deformed at a time of forming the skin material three-dimensionally, and it is impossible to actually bond a plurality of skin materials by sewing so as to faithfully reproduce details of a three-dimensionally produced skin assembly. Therefore, there is a disadvantage that a flat impression is applied and an artificial-looking image appears. JP-A-9052282 describes a method for forming a thermoplastic resin sheet into a moulded product having an undercut part. The subject of this document is the design of the mould for replacing an extensive split mould for forming those undercuts. This document does not describe any material, intended to imitate a material formed by attaching several pieces of material to one another that is used for a skin material for a vehicle.

DE-A-3303913 is directed to the manufacturing of sheet material in general having undercut portions. This document describes a specific design of a mould for that purpose.

An object of the present invention is to provided a skin material for a vehicle seat provided with an outer appearance shape which is equal to an outer appearance of the skin assembly manufactured three-dimensionally by actually sewing or bonding in accordance with a welding process a plurality of skin materials, in spite of a one-piece skin material.

Further, the other object of the present invention is to provide a skin material for a vehicle and a seat for a vehicle which reproduce a three-dimensional outer appearance by arranging a wadding material in a back surface side of the skin material, thereby more clearly highlighting a concavo-convex shape on the surface.

### Disclosure of the Invention

In accordance with claim 1 of the present invention, there is provided a skin material for a vehicle seat wherein a general surface and a predetermined shape having an outer appearance which is equal to a joint portion obtained by actually bonding a plurality of skin materials are formed in a one-piece skin material in accordance with a transcription, and an outer appearance which is equal to a three-dimensional outer appearance obtained by actually bonding a plurality of skin materials is formed three-dimensionally by one skin material having an undercut portion.

As mentioned above, in accordance with the skin material for the vehicle on the basis of the present invention, since it is possible to three-dimensionally form the outer appearance shape equal to the outer appearance of the skin assembly which is three-dimensionally manufactured by actually sewing a plurality of skin materials, in spite of the one-piece skin, no deformation is generated in the outer appearance shape of the surface at a time of covering the cushion material, and it is possible to obtain an outer appearance similar to a real thing. Further, since the skin material is constituted by the one-piece skin, it is possible to prevent the rain water from making an intrusion even in the case that the skin material is used in a seat for an outdoor vehicle. Further, since the skin material is structured such as to be provided with a form material arranged in the other portions than the joint portion in a back surface of the skin material and forming a seat surface concavo-convex shape, it is possible to reproduce a three-dimensional outer appearance by simultaneously forming the seat surface concavo-convex shape so as to highlight the concavo-convex shape more clear.

The joint portion having the outer appearance equal to the outer appearance obtained by actually bonding a plurality of skin materials is constituted by any one of a joint in accordance with a sewing, a joint in accordance with a welding process and an ornamental stitch portion provided in the skin material surface.

As mentioned above, in accordance with the present invention, since it is possible to form the outer appearance equal to the joint portion obtained by bonding a plurality of skin materials in accordance with the sewing, the welding process and the ornamental stitch portion, it is possible to prepare the seat having various designs. In this case, the ornamental stitch portion is particularly constituted by a pattern portion.

Further, the joint portion may be formed in a shape protruding from the general surface so as to be formed in an outer appearance obtained by overlapping a plurality of skin materials.

Further, it is preferable that the skin material is structured such that all or a part of a joint portion shape of a plurality of skin materials, an undercut shape of the joint portion, a shape of a sewing thread, an undercut shape of the sewing thread, a shape of a seam hole, a concavo-convex shape obtained by overlapping the skin materials in the joint portion, and a shape showing a biting state of the sewing thread into the skin material are transcribed.

As mentioned above, since the skin material for the vehicle in accordance with the present invention is structured such that not only the seam pattern is transcribed, but also all or a part of the undercut shape of the joint portion in the outer appearance of the sewing portion, the sewing thread, the seam hole, the concavo-convex shape of the skin material overlapped in the joint portion and the skin material biting state of the sewing are transcribed, it is possible to faithfully reproduce the outer appearance equal to the outer appearance obtained by actually sewing. Accordingly, it is possible to obtain the skin material for the vehicle which has the high-class feeling without any artificial impression.

Further, since the structure is made such that the different outer appearances are provided on the boundary of the joint portion or the ornamental stitch portion, the outer appearance in which two or more kinds of skin materials are sewn is obtained, and it is possible to obtain the skin material for the vehicle which is rich in the design property.

Further, since the structure is made such that the back surface material is arranged in the form material and the form material is pinched by the back surface material and the skin material, an adhesion property between the form material and the skin material is increased, and the concavo-convex shape on the front surface becomes more clear. Further, since the form material is held by the skin material and the back surface material, the shape of the form material is not lost and it is possible to keep the surface shape in a good condition for a long time.

In accordance with claim 8 of the present invention, there is provided a seat for a vehicle, wherein the seat is covered with a skin material in which a general surface and a predetermined shape having an outer appearance which is equal to a joint portion obtained by actually bonding a plurality of skin materials are formed in a one-piece skin material in accordance with a transcription, and an outer appearance which is equal to a three-dimensional outer appearance obtained by actually bonding a plurality of skin materials is formed three-dimensionally by one skin material having an undercut portion.

### Brief Description of the Drawings

Fig. 1 is an explanatory view showing an embodiment of a seat for a vehicle in accordance with the present invention;
Fig. 2 is a partly enlarged view of a skin material used in the seat for the vehicle;
Fig. 3 is an enlarged view of a portion in which a sewing thread pattern, a seam hole pattern and a joint portion pattern are formed in the skin material;
Fig. 4 is a cross sectional view showing the joint portion pattern provided with an undercut portion;
Fig. 5 is a cross sectional view showing the sewing thread pattern in which an undercut portion is provided in one side;
Fig. 6 is a cross sectional view showing the sewing thread pattern in which the undercut portion is provided in both sides;
Fig. 7 is an explanatory view showing a joint portion pattern in accordance with the other aspect;
Fig. 8 is an explanatory view showing a state in which the undercut portion is provided in the joint portion pattern as shown in Fig. 7;
Fig. 9 is an explanatory view showing a pattern expressing a state in which the sewing thread bites into the skin material;
Fig. 10 is an explanatory view showing an example of the other patterning;
Fig. 11 is an exploded explanatory view of a skin material provided with a wadding material;
Fig. 12 is an explanatory view showing an attaching step of the wadding material;
Fig. 13 is an explanatory view showing an attaching step of the wadding material;
Fig. 14 is a cross sectional explanatory view of a skin material provided with the wadding material;
Fig. 15 is a cross sectional view showing an example of a forming metal mold which is not part of the present invention;
Fig. 16 is a cross sectional view showing an example of the forming metal mold which is not part of the present invention ;
Fig, 17 is an explanatory view showing a manufacturing step of the forming metal mold shown in Fig. 16 which is not part of the present invention;
Fig. 18 is an explanatory view showing an example of the forming metal mold which is not part of the present invention;
Fig. 19 is an explanatory view showing an opening peripheral edge portion of the forming metal mold which is not part of the present invention;
Figs. 20 to 23 are explanatory views showing an example of a manufacturing apparatus which is not part of the present invention of a seat for a vehicle;
Figs. 24 and 25 are explanatory views showing a seat for a vehicle in which a skin material and a cushion material are integrally expansion molded; and
Figs. 26 to 29 are explanatory views showing the other manufacturing apparatus which is not part of the present invention of the seat for the vehicle.

### Best Mode for Carrying Out the Invention

A description will be given below of an embodiment in accordance with the present invention with reference to the accompanying drawings. In this case, members, arrangements and the like described below do not limit to the present invention, but can be variously modified within the scope of the present invention.

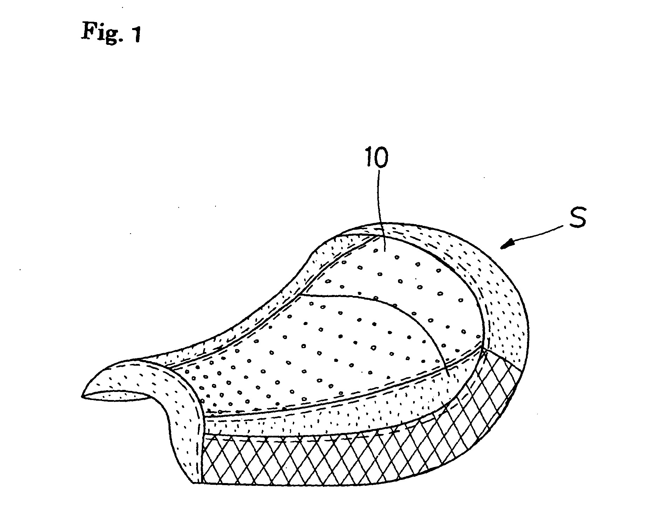

A skin material 10 in accordance with the present embodiment is mainly used in a seat for an outward vehicle, and is particularly used in a seat S for a vehicle such as a two-wheel vehicle as shown in Fig. 1. In this case, the skin material can be used in a seat for a vehicle such as a three-wheel buggy vehicle, a trapezoid seat type carriage, a construction equipment seat, an agricultural equipment seat, a snow mobile, a water bike and the like without being limited to the seat for the two-wheel vehicle.

The skin material 10 is constituted by a synthetic resin layer 11 and a fiber base material layer 12. The synthetic resin layer 11 is formed by a polyvinyl chloride resin, a polyolefin resin, an acrylic resin or the like. Various additive agents such as a plasticizing material, a fixing agent, an antioxidant, a UV ray protective agent, a lubricant, an antistatic agent, a pigment, an inorganic filler and the like may be added to the synthetic resin layer as occasion demands.

The fiber base material layer 12 is constituted by a woven cloth such as a woven fabric, a knit fabric and the like, or a non-woven cloth such as a natural fiber, a synthetic fiber and the like. In particular, since the knit fabric has a stretch property and follows to the synthetic resin layer 11 in the case that a sewing thread pattern and a grain pattern are provided in the synthetic resin layer 11, the knit fabric is preferable.

In this case, a surface treatment layer, for example, an urethane coating layer, a silicone urethane coating layer and the like may be provided in a front surface of synthetic resin layer 11. Further, an antistatic agent, an age resistor, a pigment or the like may be added and blended to the coating layer as occasion demands.

Further, it is preferable that the skin material having a breaking elongation equal to or more than about 200 % is used as the skin material 10. The sewing thread pattern and the grain pattern are sufficiently applied, and the concavo-convex shape is clearly transcribed, by using the skin material 10 having the breaking elongation equal to or more than about 200 %.

In the skin material 10 in accordance with the present embodiment, a predetermined shape having an outer appearance equal to the joint portion obtained by actually bonding a plurality of skin materials in accordance with a sewing or a welding process is formed in a surface of the skin material 10 in accordance with a transcription, and the skin material 10 is provided with an outer appearance shape equal to a three-dimensional outer appearance obtained by actually bonding a plurality of skin materials in accordance with the sewing or the welding process while being constituted by one-piece skin material, and is three-dimensionally formed.

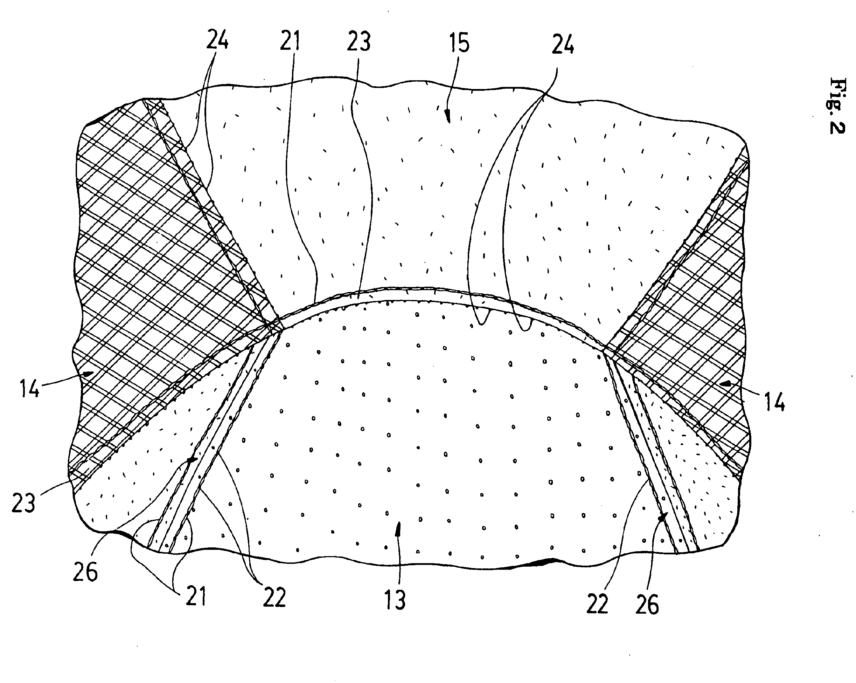

Fig. 2 is a partly enlarged view of the skin material 10 used in the seat S for the two-wheel vehicle. In Fig. 2, there is illustrated a part of a part 13 covering a seat surface, a part of a part 14 covering a side surface, and a part 15 covering a rear side surface.

A sewing thread, a seam hole, a skin material overlapping concavo-convex shape of the joint portion and a state in which the sewing thread bites into the skin material are transcribed in the front surface of the skin material 10, in order to form an outer appearance in which a plurality of skin materials are bonded in accordance with a sewing while being constituted by the one-piece skin material.

In other words, a sewing thread pattern 21, a seam hole pattern 22, a joint portion pattern 23 and a pattern 24 showing a state in which the sewing thread bites into the skin material are formed in the front surface of the skin material 10 in accordance with a transcription.

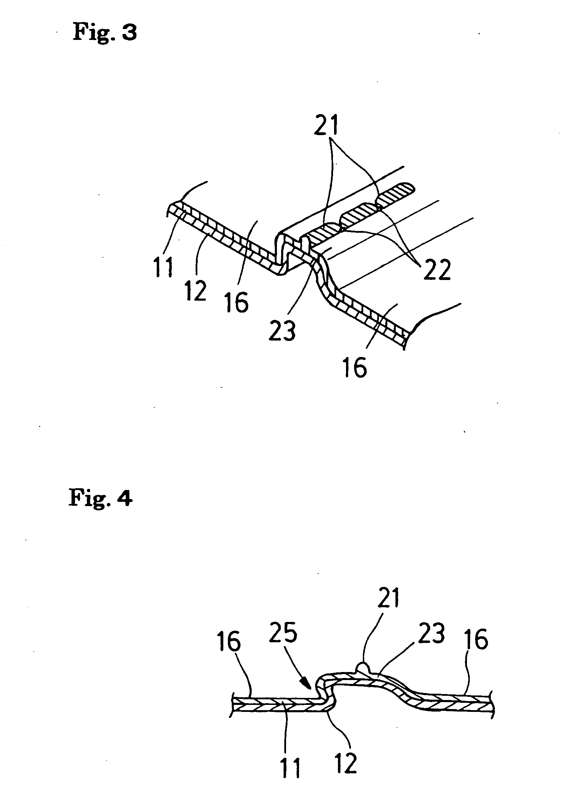

Fig. 3 is an enlarged view of a portion in which the sewing thread pattern 21, the seam hole pattern 22 and the joint portion pattern 23 are formed. The joint portion pattern 23 is formed so as to protrude from a general surface 16 of the skin material 10. In the example in Fig. 3, the synthetic resin layer 11 and the fiber base material layer 12 are curved upward in accordance with a forming, whereby the joint portion pattern 23 is formed so as to bulge.

Since the joint portion pattern 23 is formed in the concavo-convex shape as mentioned above, a state in which two skin materials are overlapped can be expressed in the skin material 10.

The sewing thread pattern 21 is formed on the joint portion pattern 23. A state in which two skin materials are sewn in the joint portion can be expressed by the sewing thread pattern 21.

The sewing thread pattern 21 is a pattern expressing a fine line of a single stitch. A pattern obtained by twining the fibers is formed in the front surface of the sewing thread pattern 21, and shows an outer appearance such as a real thread.

The seam hole pattern 22 is formed between the sewing thread patterns 21. The seam hole pattern 22 is formed so as to express an outer appearance in which an end portion of the sewing thread enters into the seam hole.

In this case, as shown in Fig. 4, the structure may be made such that an undercut portion 25 is provided in a portion of the joint portion pattern 23. Since the forming material of the skin material 10 is soft and has an elasticity, the undercut portion 25 can be formed by forcibly drawing off.

The joint portion pattern 23 is formed as an outer appearance protruding toward the general surface 16 of the skin material 10 positioned in a lower side, by arranging the undercut portion 25, the joint portion pattern 23 and the skin material 10 positioned in a lower side appear as separate bodies, and it is possible to express the state in which two skin materials are overlapped, like a real one.

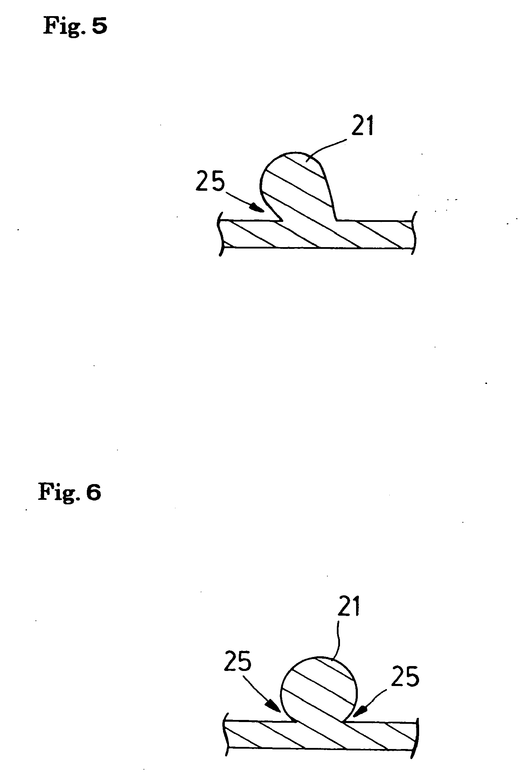

Further, as shown in Fig. 5, the undercut portion 25 may be provided in the portion of the sewing thread pattern 21. The sewing thread pattern 21 can be highlighted by arranging the undercut portion 25 in the portion of the sewing thread pattern 21, it is possible to form an outer appearance in which the sewing thread pattern 21 and the joint portion pattern 23 are formed as separate bodies, and it is possible to express the state of being actually sewn by the thread like a real one.

The undercut portion 25 may be provided in one side of the sewing thread pattern as shown in Fig. 5, or may be provided in both sides of the sewing thread pattern as shown in Fig. 6. Further, the undercut portion 25 may be provided alternately or may be provided in a random order in spite of being provided in all of the sewing thread pattern 21.

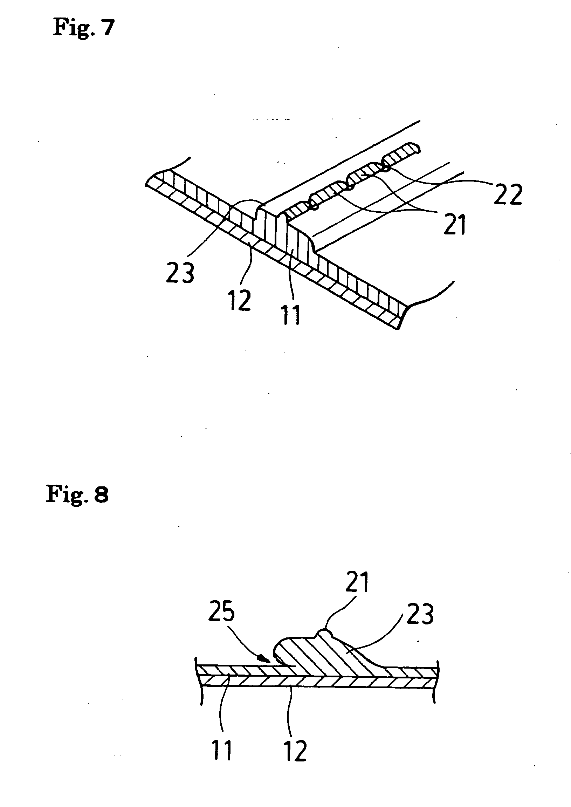

Fig. 7 is an explanatory view showing a joint portion pattern 23 in accordance with the other aspect.

In the example shown in Fig. 7, in order to make the joint portion pattern 23 to protrude rather than the general surface 16 of the skin material 10, the joint portion pattern 23 is formed so as to bulge by making the synthetic resin layer 11 in the portion of the joint portion pattern 23 thicker than the other portion.

Even in the case that the synthetic resin layer 11 in the portion of the joint portion pattern 23 is made thicker as mentioned above, the state in which two skin materials are overlapped can be more really expressed by employing the structure in which the undercut portion 25 is provided in the portion of the joint portion pattern 23, as shown in Fig. 8, and this structure is preferable.

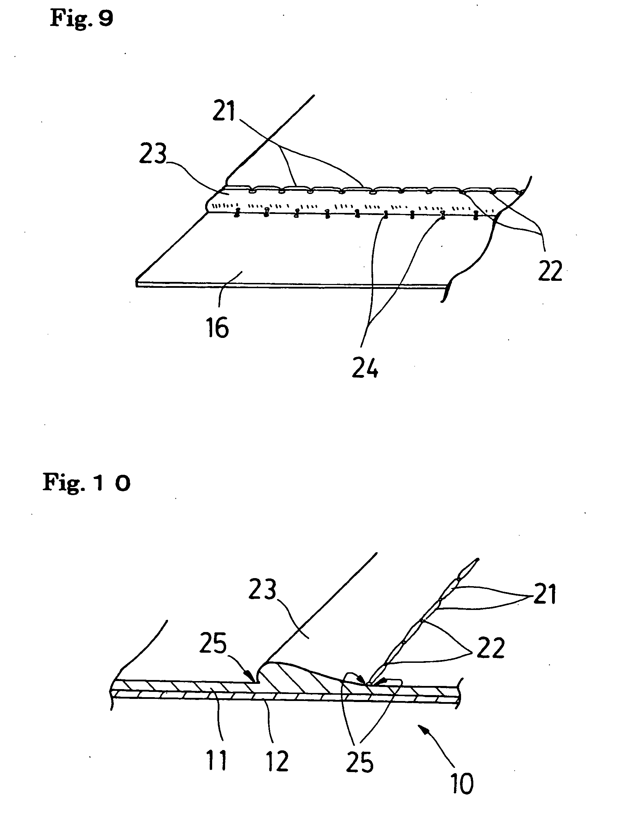

A pattern 24 expressing a state in which the sewing thread bites into the skin material is further formed in the portion of the joint portion pattern 23, as shown in Fig. 9. When sewing two skin materials, the front surface sides of the skin materials are first aligned with each other and the end portions are sewn, and the skin material positioned in an upper side is next reversed and is sewn while applying a stitch from the front surface side. However, the pattern 24 reproduces a state in which the first sewn sewing thread is exposed to an outer portion.

Further, the stitch applied from the front surface side is formed as the sewing thread pattern 21 on the upper surface of the skin material 10.

As mentioned above, in the skin material 10 in accordance with the present embodiment, it goes without saying that the sewing thread, the seam hole and the joint portion are transcribed, and it is possible to transcribe the state in which the undercut portion is provided in the sewing thread and the joint portion, and the state in which the sewing bites into the skin material, and the shape relating to the sewing is faithfully restored. The outer appearance equal to the outer appearance obtained by bonding a plurality of skin materials in accordance with the sewing can be reproduced on one skin material in the manner mentioned above.

Further, the different grain patterns are applied on the boundary of the joint portion pattern 23 in the skin material 10 in accordance with the present embodiment. In the present embodiment, as shown in Figs. 1 and 2, the structure is made such that the different patterns are applied to the portion 13 covering the seat surface, the portion 14 covering the side surface and the portion 15 covering the rear side surface, or the grain pattern is not applied to one of the adjacent portions.

Further, a pattern portion 26 corresponding to an ornamental sewing portion is provided in the portion 13 covering the seat surface, and there is provided an outer appearance in which the skin materials having the different grain patterns or to which the grain pattern is not applied are bonded on the boundary of the pattern portion 26. The sewing thread pattern 21, the seam hole pattern 22, the joint portion pattern 23 and the pattern 24 expressing the state in which the sewing bites into the skin material are applied respectively to the portions in which the skin materials having the different patterns are adjacent, and there is provided an outer appearance in which a plurality of skin materials are actually bonded in accordance with the sewing.

In this case, the sewing thread pattern 21, the seam hole pattern 22, the joint portion pattern 23 and the like are not limited to the structures mentioned above, but can be freely changed in accordance with the designs.

For example, in the skin material 10 as shown in Fig. 10, there is formed the joint portion pattern 23 provided with the undercut portion 25, and there is further formed the sewing thread pattern 21 being adjacent to the joint portion 23 and provided with the undercut portion 25. Further, the seam hole pattern 22 is formed between the sewing thread patterns 21. Further, the grain pattern is not limited to the structure mentioned above, but may be structured such as to have a different luster or have a portion to which no grain pattern is applied.

Further, in the embodiment mentioned above, there is shown the structure in which the joint portion pattern 23 protrudes rather than the general surface 16, however, the joint portion pattern 23 and the general surface 16 may be flat. In this case, for example, the general surface 16 portion adjacent to the joint portion pattern 23 is formed bulging so as to be approximately flush with the joint portion pattern 23. As mentioned above, since the joint portion pattern 23 and the general surface 16 are formed as the flat shape, the joint portion protrudes toward the back surface side of the skin material, and the state in which the concavo-convex shape does not appear is expressed on the front surface side.

Further, in the embodiment mentioned above, the description is given of the skin material 10 having the outer appearance in which a plurality of skin materials are bonded in accordance with the sewing, however, the outer appearance is not limited to the sewing, but may be structured such that a plurality of skin materials are bonded in accordance with the welding process.

In this case, the concavo-convex shape obtained by overlapping the skin materials in the joint portion is transcribed to the skin material and the joint portion pattern is formed in the skin material. Even in the case that the joint portion pattern is formed in accordance with the welding process, the structure may be made such that the undercut portion is provided as occasion demands, and the joint portion pattern and the skin material positioned in the lower side are seen as the independent bodies.

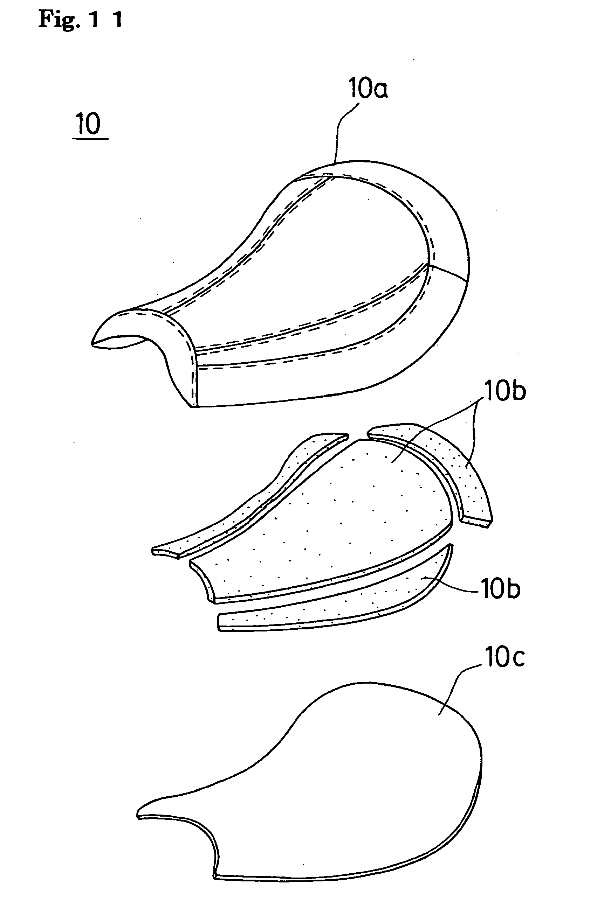

Figs. 11 to 14 are explanatory views showing the skin material 10 in accordance with the other embodiment. The skin material 10 in accordance with the present embodiment is constituted by a skin 10a, a wadding material 10b and a back surface material 10c. The skin 10a is constituted by the synthetic resin layer 11 and the fiber base material layer 12.

The wadding material 10b employs a structure, for example, made of a polyurethane foam, a polyvinyl chloride (PVC) foam, a thermoplastic elastomer olefin (TPO) foam, a polypropylene (PP) foam, a polyethylene (PE) foam or the like.

The back surface material 10c is constituted by a sheet material having an elasticity, and employs, for example, a resin sheet material made of a polyvinyl chloride resin. Alternatively, a woven fabric, a knit fabric, an unwoven fabric or the like made of a natural fiber or a synthetic fiber is employed.

In the skin material 10 in accordance with the present embodiment, a predetermined shape having an outer appearance equal to the joint portion obtained by actually bonding a plurality of skin materials in accordance with the sewing or the welding process is formed on the front surface of the skin 10a in accordance with the transcription. Accordingly, the skin material 10 is provided with the outer appearance equal to the three-dimensional outer appearance obtained by actually bonding a plurality of skin materials in accordance with the sewing or the welding process while being constituted by the one-piece skin material, and is formed three-dimensionally.

The shape formed on the front surface of the skin 10a is equal to the shape described in the embodiment 1 mentioned above, and is shown in Figs. 1 to 10.

Fig. 11 is an exploded perspective view of the skin material 10 in accordance with the present embodiment. As illustrated, the skin material 10 in accordance with the present embodiment is provided with the wadding material 10b and the back surface material 10c in the back side of the skin 10a.

The wadding material 10b is arranged in the other regions than the seam portion of the sewing thread pattern 21 or the like. The wadding material 10b is cut into a shape of an arranged position, and is formed at a size which does not cover the seam portion. It is possible to express a plump quality feeling on the front surface on the boundary of the seam, by arranging the wadding material 10b.

Further, the back surface material 10c is arranged in the wadding material 10b, and the back surface material 10c is adhered to the wadding material 10b and the skin material 10a by an adhesive agent. The back surface material 10c and the skin 10a are bonded at the seam portion, and is structured such as to pinch the wadding material 10b by the skin 10a and the back surface material 10c.

Since the back surface material 10c is provided, the wadding material 10b is closely contacted with the skin material 10a, the plump feeling is effectively obtained in the front surface side, and the seam portion of the skin 10a is closely contacted with the back surface material 10c so as to form a clear valley. Accordingly, it is possible to highlight the concavo-convex shape of the front surface more.

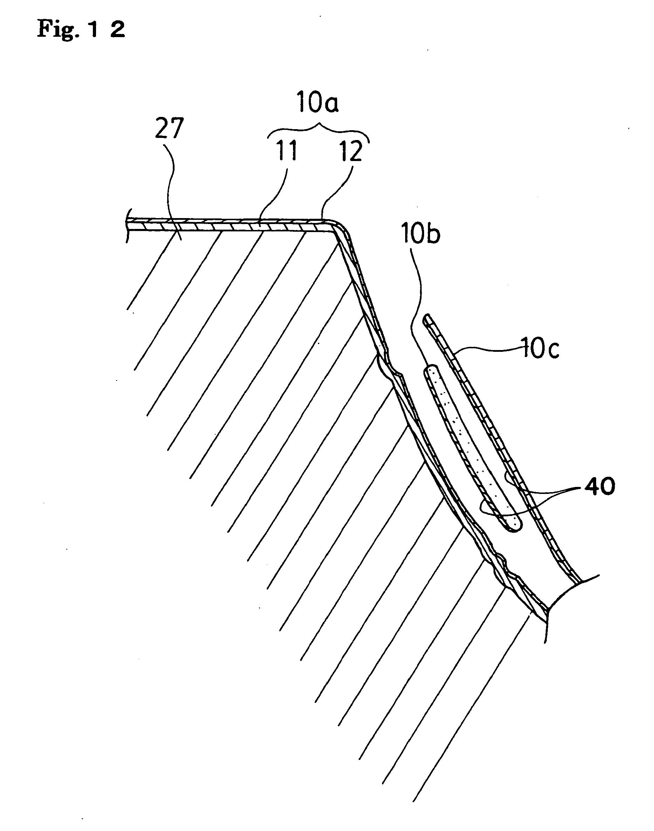

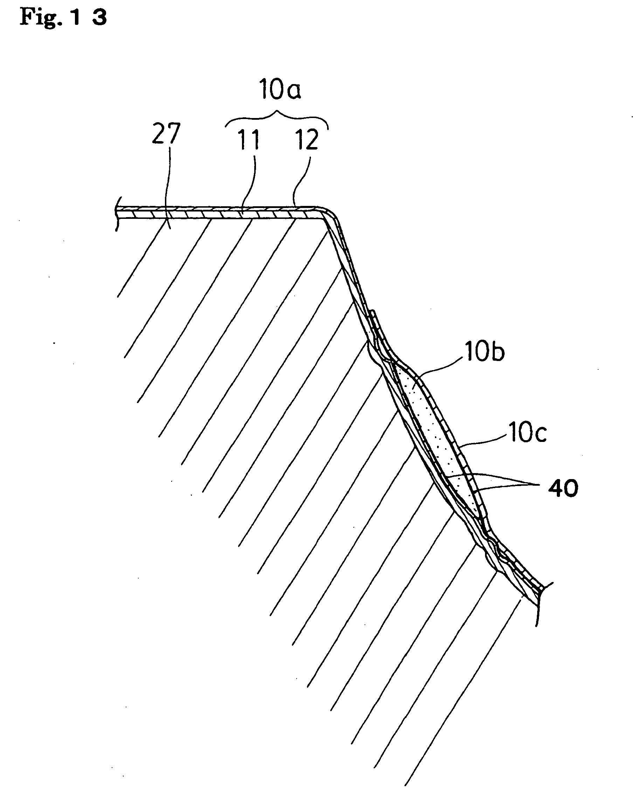

Figs. 12 and 13 are explanatory views showing an example of an attaching step of the wadding material 10b to the skin 10a.

In Figs. 12 and 13, an example in which the pattern is transcribed to the skin 10a in accordance with a vacuum forming is shown. When attaching the wadding material 10b, the adhesive agent is applied to any one or both of the skin 10a and the wadding material 10b, and the wadding material 10b is adhered to the skin 10a.

Next, the adhesive agent is applied to any one or all of the wadding material 10b, the skin 10a of a portion in which the wadding material 10b is not arranged, and the back surface material 10c, and the back surface material 10c is adhered to the skin 10a and the wadding material 10b, as shown in Fig. 13.

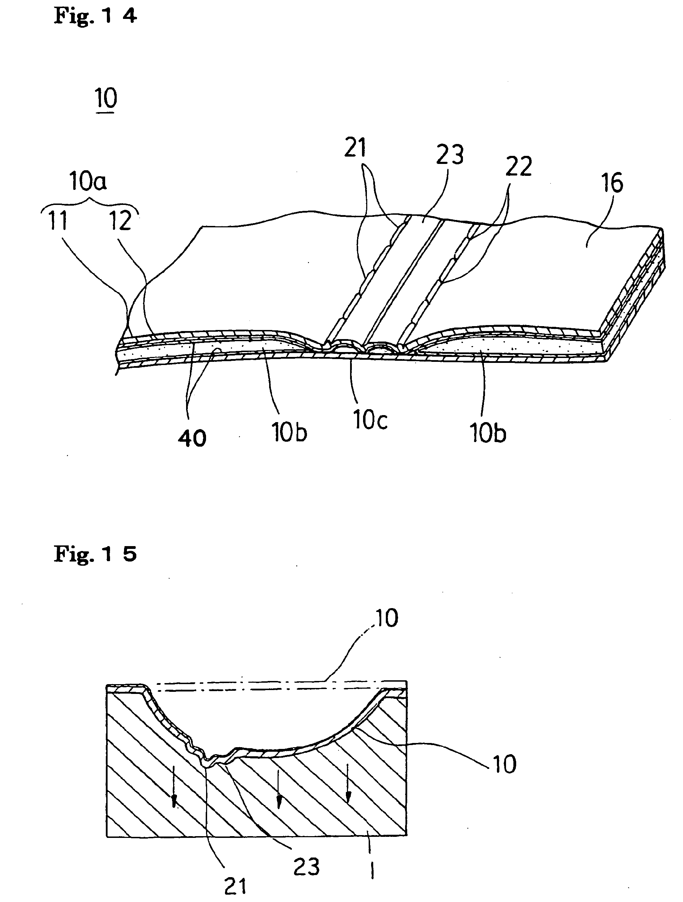

The skin material 10 provided with the wadding material 10b and the back surface material 10c is formed in the manner mentioned above, as shown in Fig. 14.

In this case, the attaching of the wadding material 10b to the skin 10a is not limited to the method shown in Figs. 12 and 13. In other words, the wadding material 10b and the back surface material 10c may be attached in a state in which the skin 10a does not exist within the mold.

Further, the wadding material 10b and the back surface material 10c may be previously attached to the skin 10a and thereafter transcribed to the skin 10a.

Further, the skin 10a and the back surface 10c may be welded by a welder in the joint portion therebetween.

The seat S for the vehicle can be formed by using the skin material 10 mentioned above.

The seat S for the vehicle is constituted by the skin material 10, the cushion material and the bottom plate. The seat S for the vehicle is formed by mounting the cushion material on the bottom plate and covering with the skin material 10, and a terminal portion of the skin material 10 is firmly fixed to the bottom plate in accordance with a staple (not shown), the welding or the like.

The cushion material is formed by a soft foam material, for example, an urethane foam, a polypropylene (PP) foam or a polyethylene (PE) foam, and is mounted on the bottom plate. The bottom plate is formed, for example, a polypropylene (PP), an ABS resin or the like.

The bottom plate is formed, for example, by the polypropylene (PP), the ABS resin or the like, however, it is preferable to secure a rigidity without increasing a weight of the bottom plate, by using the bottom plate formed by using a glass-filled polypropylene (PPG) or a filler-filled polypropylene (PPT) corresponding to a fiber reinforced resin. For example, a carbon fiber is mixed as a reinforcing fiber to the PPT.

The transcription of each of the shapes to the skin material 10 is executed, for example, in accordance with the vacuum forming as mentioned above, however, can employ the other methods such as a welding method, a mold pressing method, a pressure forming method, an injection forming method, a blow forming method and the like. In the case that the transcription is executed in accordance with the vacuum forming or the pressure forming by using the forming metal mold 1 made of the porous material having micro holes, as shown in Fig. 15, it is possible to simultaneously execute the forming of forming the skin material 10 in the three-dimensional shape and the transcription of the various patterns such as the sewing thread pattern 21, the joint portion pattern 23 and the like. Accordingly, no deformation is later generated in the sewing thread pattern 21 and the joint portion pattern 23. Therefore, it is possible to faithfully and reproduce even a detail portion obtained by actually bonding a plurality of skin materials in accordance with the sewing as a complete equal shape, in the front surface of the seat corresponding to the product, and it is possible to obtain the outer appearance which is more similar to the real thing. Further, since it is not necessary to position the pattern as is different from the case that the skin material 10 is formed later, it is possible to improve a working efficiency.

As the forming metal mold 1 made of the porous material mentioned above, it is preferable to employ a forming metal mold 1 made of a porous material having micro holes of a hole diameter between 3 µm and 25 µm, preferably between 5 µm and 25 µm. In the case that the hole diameter is smaller than 3 µm, a vacuum efficiency is inferior, and in the case that the hole diameter is larger than 25 µm, a precise transcription can not be executed.

In the case that the hole diameter is within the range mentioned above, more preferably, between 10 µm and 20 µm, it is possible to execute the precise transcription without lowering the vacuum efficiency, and it is possible to obtain a result having a best balance of a production efficiency and a transcription reproducibility.

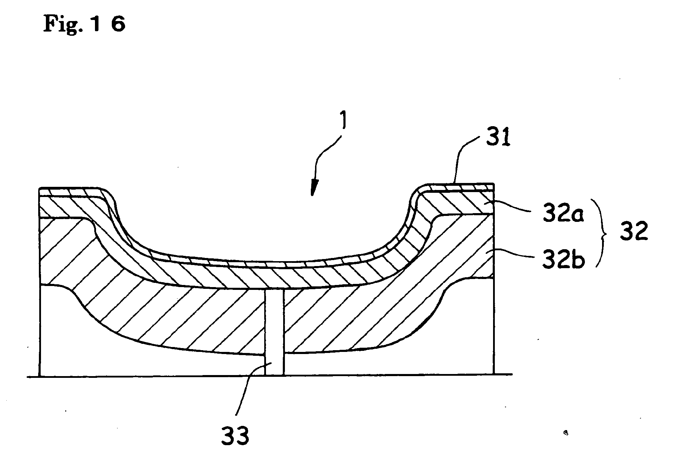

Alternatively, a forming metal mold shown in Fig. 16 is used for forming the skin material 10.

The forming metal mold 1 in accordance with the present embodiment is constituted by a vacuum forming mold, for example, a skin forming metal mold in which the skin material of the seat of the motor cycle is formed. The forming metal mold 1 is structured such as to be provided with a porous metal spray layer 31 and a porous backup layer 32.

The metal spray layer 31 is structured such as to form a cavity surface of a metal mold, is made of an aluminum, a zinc or the other metals, and is formed by thermal spraying a metal simple substance or an alloy thereof to a master model. The thermal spraying method employs a known thermal spraying method such as a flame spraying, an arch spraying, a plasma spraying or the like.

Since the metal spray later 31 is formed by thermal spraying the metal to the master model, the sprayed metal is closely contacted with a concavo-convex shape of the master model, and the concavo-convex shape of the master model is faithfully transcribed to the front surface of the metal spray layer.

Accordingly, in the case of the metal mold forming the skin material of the motor cycle as in the present embodiment, it is possible to preferably transcribe a grain leather pattern of the skin material to the metal spray layer 31.

A pore diameter, a pore volume and the like of the metal spray layer 31 can be controlled on the basis of a used metal material, an injection pressure, a temperature of a droplet, a spray distance, a thermal spray material supply speed and the like, and a film thickness can be adjusted.

In the present embodiment, the thickness of the metal spray layer 31 is set to be equal to or more than 0.7 mm and equal to or less than 1.0 mm. In other words, in the case that the thickness of the metal spray layer 31 is equal to or less than 0.7 mm, there is generated a disadvantage that a crack tends to be generated on the front surface because the layer is too thin.

Further, in the case that the thickness of the metal spray layer 31 is larger than 1.0 mm, the ventilation resistance becomes large, and the forming efficiency is deteriorated. Further, a cost increase is caused. Accordingly, it is preferable that the metal spray layer 31 is formed within the range of the numerical value mentioned above.

The backup layer 32 is constituted by a first layer 32a and a second layer 32b.

The first layer 32a and the second layer 32b are constituted by a metal powder and a resin combining the metal powder, and are formed porous.

In the present embodiment, an aluminum grid is used as the metal powder. The manufacturing cost can be reduced by using the aluminum grid which is inexpensive as the metal powder, and a preferable structure can be obtained.

The first layer 32a and the second layer 32b are formed by combining the metal powder such as the aluminum grid or the like by a thermosetting resin. For example, an epoxy resin is used as the thermosetting resin.

In the present embodiment, a thickness of the first layer 32a is set to be equal to or more than 7.0 mm and equal to or less than 10.0 mm. Further, a thickness of the second layer 32b is set to be equal to or more than 50.0 mm and equal to or less than 70.0 mm.

A sufficient breathability can be secured in each of the layers by forming each of the layers within the above thickness range, and it is possible to secure a strength.

Further, in the present embodiment, a diameter of a hole between the grains constituting the first layer 32a is set to be equal to or more than 1.5 mm and equal to or less than 2.0 mm. Further, a diameter of a hole formed between the grains of the second layer 32b is set to be equal to or more than 3.0 mm and equal to or less than 5.0 mm.

A gap formed between the grains is not necessarily formed in a circular shape. In the case that the gap between the grains is not formed in the circular shape, a diameter of a virtual circle contacting with each of the grains forming the gap is within the range mentioned above.

In the case that the diameter of the hole formed between the grains of the first layer 32a is less than 1.5 mm, or in the case that the diameter of the hole between the grains of the second layer 32b is less than 3.0 mm, the gap between the grains becomes small, so that the ventilation resistance becomes greater and the forming efficiency is deteriorated. Accordingly, it is desirable to set the diameter of the hole formed between the grains mentioned above to the range mentioned above.

Further, in the case that the hole diameter between the grains of the first layer 32a is larger than 2.0 mm, and in the case that the hole diameter between the grains of the second layer 32b is larger than 5.0 mm, it is impossible to secure a sufficient strength of the metal mold and a disadvantage is generated.

In order to secure the strength of the metal mold, a reinforcing rib 33 constituted by a wood frame, a metal frame or the like may be buried in the backup layer 32.

In this case, in the present embodiment, the breathability and the metal mold strength are secured by forming the backup layer 32 by two layers, however, the backup layer may be formed by one layer, or three or more layers.

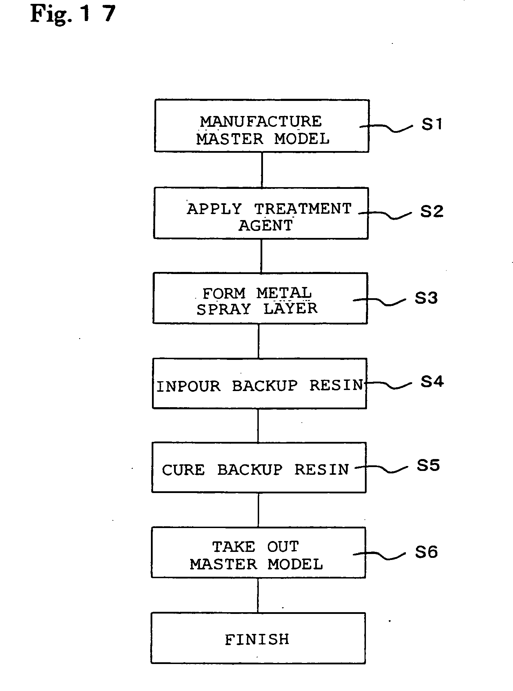

Fig. 17 shows a manufacturing step of the forming metal mold 1.

In a first step S1, the master model is manufactured. In the present embodiment, since the metal mold is structured such as to form the skin material of the motor cycle seat, the seat for the two-wheel vehicle is formed as the master model.

The seat for the two-wheel vehicle is conventionally known, and is formed by mounting the cushion material on the bottom plate and covering with the skin material.

In a second step S2, the surface treatment material is applied to the master model. Further, in a third step S3, the metal is sprayed to the front surface of the master model. The sprayed metal is closely contacted with the front surface of the master model, and the grain pattern of the front surface of the master model is faithfully copied.

Further, the step controls the used metal material, the injection pressure, the temperature of the droplet, the spray distance, the supply speed of the spray material and the like, forms the porous metal spray layer 31, and secures the breathability in the metal spray layer 31.

In a fourth step S4, the backup resin is inpoured. In the present embodiment, the backup resin forming the first layer 32a and the backup resin forming the second layer 32b are respectively inpoured.

In a fifth step, the forming metal mold 1 in the halfway step is placed in an environment kept at a predetermined temperature. When a predetermined time has passed under the environment, the backup resin is cured.

When the backup layer 32 constituted by the metal spray layer 31, the first layer 32a and the second layer 32b is formed in the manner mentioned above, the master model is taken out at the end, and the forming metal mold 1 is finished.

In this case, a step of setting a plurality of needles to the master model may be added prior to the third step.

A plurality of needle holes can be provided in the metal spray layer 31 at a time of forming the metal spray layer 31 in the third step, by setting the needles to the master model. The breathability can be increased in the metal spray layer 31 provided with the needle holes, and it is possible to shorten the forming time at a time of the vacuum forming.

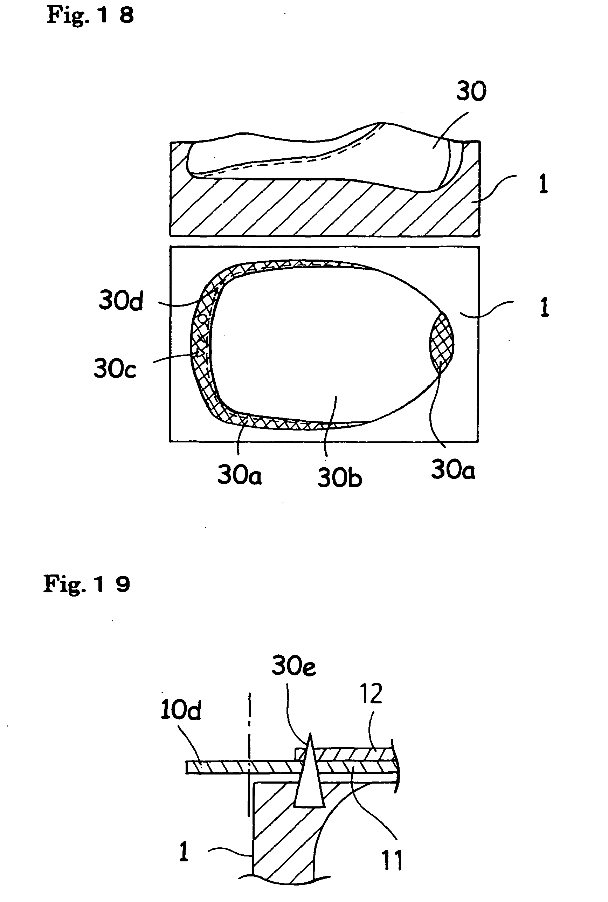

Further, it is possible to use the structure shown in Figs. 18 and 19, as the forming metal mold 1.

A porous electroforming vacuum forming metal mold is used as the forming metal mold 1. Since the porous electroforming vacuum forming metal mold is used as mentioned above, the skin material 10 is adsorbed to the metal mold from all the directions at a time of executing an evacuation, and is closely contacted with the inner side surface of the metal mold uniformly.

Further, it is possible to faithfully reproduce the narrow grain pattern and the complex drawing to the inner side surface of the metal mold because of the electroforming metal mold, and it is possible to obtain the formed produce which is rich in design property.

Fig. 18 shows a state in which the forming metal mold 1 in accordance with the present embodiment is seen from the above. As illustrated, the forming metal mold 1 in accordance with the present embodiment is structured such that a metal mold inner surface 30 is provided with a portion 30a in which the grain pattern is formed and a portion 30b in which the grain pattern is not formed, in such a manner that the grain pattern is applied to the front portion and the rear portion of the seat S for the vehicle.

Further, a predetermined design or character is formed in the portion 30a in which the grain pattern is formed, in the inner surface side of the forming metal mold 1. The predetermined design or character, for example, corresponds to a character 30c showing a product mark or a sewing thread pattern 21, and a higher-class feeling can be provided in the seat S for the vehicle by applying the design or the character.

In this case, the luster may be differentiated between the portion in which the sewing thread pattern 21 or the grain pattern is applied, and the other portions in the skin material 10 of the seat S for the vehicle. For example, since the sewing thread pattern 21 expresses the seam, the portion of the sewing thread pattern 21 is delustered and the other portions is formed in an outer appearance having more luster than the portion of the sewing thread pattern 21. Accordingly, it is possible to form the portion of the sewing thread pattern 21 in the outer appearance more similar to the actual seam.

Further, in the case that the grain pattern is formed, the portion to which the grain pattern is applied is delustered, and the portion having no grain pattern is set in the state having the luster. Accordingly, it is possible to form the portion to which the grain pattern is applied in the outer appearance similar to the natural leather.

As mentioned above, in order to change the state of the luster in accordance with the portion of the skin material 10, in the present embodiment, the surface shape is differentiated between the portion to which the sewing thread pattern 21 and the grain pattern are applied, and the other portions, in the forming surface of the forming metal mold 1.

In other words, the surface state of the portion to which the sewing thread pattern 21 and the grain pattern are applied is made rougher than the surface state of the other portions. Accordingly, the portion of the skin material 10 formed by the rough surface state portion is reflected by the surface state so as to be in the delustered state, and the other portions are formed as the state having more luster.

In the present embodiment, the metal mold having the different surface states in the portions is formed as mentioned above by executing a printing to the master model of the metal mold. In other words, the master model forming the model of the metal mold is first prepared at a time of preparing the metal mold, however, the printing is applied to the master model in accordance with a method such as a silk screen printing or the like. Accordingly, the portion to which the printing is applied can be made in the rougher surface state than the other portions.

In the skin material of the master model (hereinafter, refer to as a master model skin material), the portion of the grain pattern is structured by the natural leather, and the other portions are structured by the synthetic leather such as the polyvinyl chloride or the like. The master model skin material is formed by sewing a cut piece cut in a predetermined shape.

Further, the seam sewing the cut piece is transcribed to the metal mold so as to form the sewing thread pattern 21 of the seat S for the vehicle, and the surface shape of the natural leather is transcribed to the metal mold so as to form the grain pattern of the seat S for the vehicle.

In the present embodiment, the printing is applied to the seam portion sewing the cut piece and the natural leather portion in the master model skin material. Accordingly, the portion of the sewing thread pattern 21 of the seat S for the vehicle forming the product and the portion of the grain pattern are formed in the delustered state.

In this case, the printing may be applied after the master model having the three-dimensional shape is finished, or may be applied to the master model skin material before preparing the master model. In the case that the printing is applied to the comparatively wide range including the grain pattern portion as in the present embodiment, the printing can be more efficiently executed by applying the printing to the flat skin material, and the structure is preferable.

When applying the printing, the master model skin material is first arranged on the printing table. Further, the printing is applied to the seam or the natural leather portion on the basis of the reference position, with respect to the master model skin material arranged on the printing table.

An ink used for printing employs an ink having a film forming component constituted by a thermoplastic resin, for example, a vinyl resin, an acrylic resin, a polyester resin or the like, and in particular, in the case of the porous electroforming vacuum forming metal mold, a material having a chemical resistance in an electrolytic bath is selected.

The printing is executed, for example, by a silk screen printing, however, is not limited to this, but may employ the other printing means such as a gravure printing, an offset printing, an offset gravure printing, a relief printing, a flexographic printing or the like, and a transcribing means.

The master model having the three-dimensional shape is prepared by using the master model skin material to which the printing mentioned above is applied. Further, the forming metal mold 1 is prepared on the basis of the master model. The sewing thread pattern 21 formed by the seam of the master model and the grain pattern formed by the natural leather are reflected to the forming metal mold 1, and the portion to which the printing is applied is formed in the rougher surface state than the other portions.

In this case, a porous ceramic mold and a porous resin mold can be additionally used as the forming metal mold 1.

It is preferable that the fiber base material layer 12 is not provided in the end portion of the skin material 10 formed by the forming metal mold 1 mentioned above. In accordance with the structure mentioned above, when cutting the end portion of the skin material 10 as shown in Fig. 19 in order to arrange the shape of the skin material 10, the trim portion 10d is structured only by the synthetic resin layer 11.

In accordance with the structure mentioned above, since the trim portion 10d is structured such as not to include the fiber base material layer 12 at a time of cutting the skin material 10, a reproducing process is easily executed in the case of executing a recycle.

In this case, it is preferable that a trimming is executed at a time of attaching a needle 30e to an edge portion of the forming metal mold 1 and engaging and setting the skin material 10 to the needle 30e.

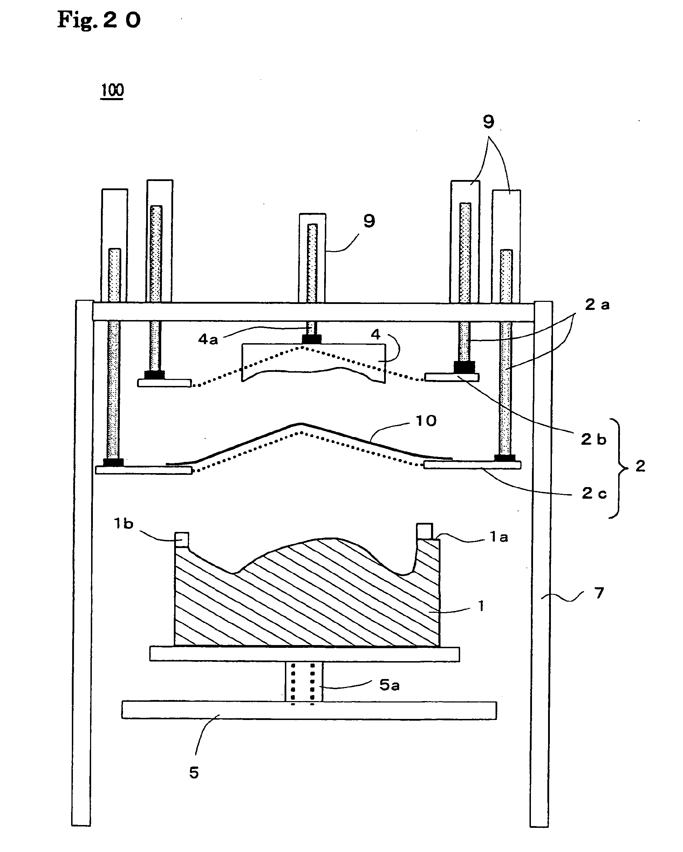

Figs. 20 to 23 are explanatory views showing an example of a manufacturing apparatus of the seat for the vehicle.

As shown in Figs. 20 to 22, a manufacturing apparatus 100 of the seat S for the vehicle is provided with the forming metal mold 1, a skin material holding frame 2 in which the skin material 10 is arranged, a heater 3 corresponding to a heating means of the skin material 10, and a pressurizing means 4 for pressurizing the constituting members of the seat S for the vehicle.

The forming metal mold 1 is formed in a predetermined three-dimensional shape in accordance with an evacuation of the skin material 10, and the constituting members of the seat S for the vehicle are arranged and are assembled in the forming metal mold 1. A suction hole connected to a vacuum apparatus (not shown) is provided in a surface in which the forming metal mold 1 is arranged.

A metal mold shown in Figs. 15 to 19 mentioned above is used as the forming metal mold 1.

In this case, the forming metal mold 1 may be structured such as to be tiltable and rotatable around a shaft 5a of the receiving table 5. Accordingly, a working portion can be always placed at a preferable position of a worker at a time of firmly contacting the terminal portion of the skin material 10 to the bottom plate by the staple.

In the manufacturing apparatus 100, a standing wall portion 1b is provided in an opening peripheral edge portion 1a of the forming metal mold 1. The standing wall portion 1b is provided in a standing manner at a predetermined interval in the opening peripheral edge portion 1a of the forming metal mold 1. The standing wall portion 1b is structured such as to pinch and hold the skin material 10 with respect to a lower side surface of an upper frame 2b in the skin material holding frame 2.

The skin material holding frame 2 of the skin material 10 is constituted by the upper frame 2b and a lower frame 2c. The upper frame 2b and the lower frame 2c are formed in a donut shape having a hollow portion which is slightly smaller than the shape of the skin material 10.

The lower frame 2c is provided with a notch portion which can be firmly contacted with the opening peripheral edge portion 1a of the forming metal mold 1 and can be engaged with the standing wall portion 1b, while keeping clear of the standing wall portion 1b of the forming metal mold 1. Further, the lower frame 2c is formed such that an upper surface of the lower frame 2c is approximately equal to or lower than a thickness of an upper surface of the standing wall portion 1b at a time of being arranged so as to be closely contacted with the opening peripheral edge portion 1a of the forming metal mold 1.

In accordance with the structure mentioned above, when arranging the skin material 10 between the upper frame 2b and the lower frame 2c and arranging the upper frame 2b and the lower frame 2c so as to move downward to the opening peripheral edge portion 1a of the forming metal mold 1, the skin material 10 is pinched and held between the lower surface of the upper frame 2b and the upper surface of the standing wall portion 1b.

Alternatively, in the case that the upper surface of the lower frame 2c is approximately flushed with the upper surface of the standing wall portion 1b, the skin material 10 is pinched and held between the lower surface of the upper frame 2b, and the upper surface of the standing wall portion 1b and the upper surface of the lower frame 2c. In this case, when the skin material 10 is held, the terminal portion of the skin material 10 may be trimmed and the shape of the skin material 10 may be arranged as occasion demands.

Further, the structure may be made such that the notch portion engaging with the standing wall portion 1b is not provided in the lower frame 2c. In this case, the skin material 10 is pinched and fixed between the upper frame 2b and the lower frame 2c, by fixing the upper frame 2b and the lower frame 2c to the metal mold by a clamp means 8.

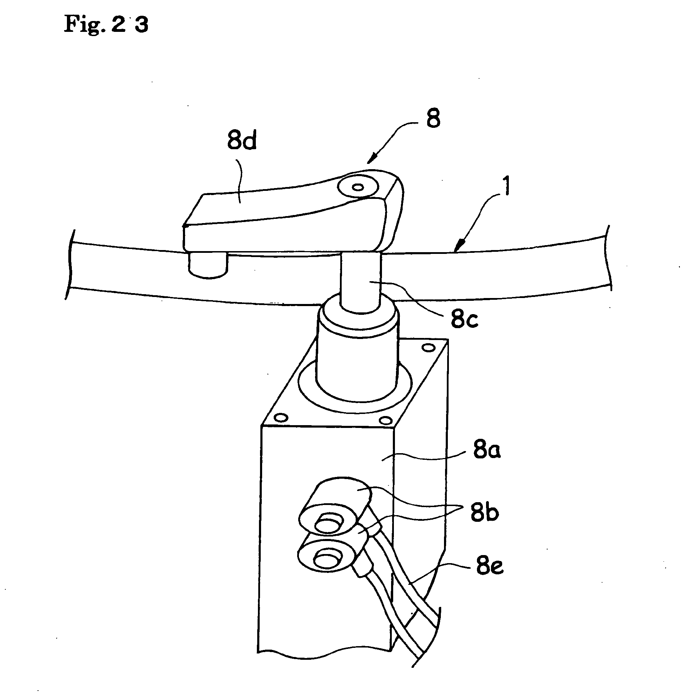

A particular structure of the clamp means 8 is shown in Fig. 23. As shown in Fig. 23, the clamp means 8 is structured such as to be provided with a base portion 8a arranged in the forming metal mold 1, a drive apparatus 8b constituted by an air cylinder provided in the base portion 8a, a link mechanism (not shown) connected to the piston rod of the air cylinder, a shaft portion 8c connected to the link mechanism, and a pressing portion 8d provided in the shaft portion 8c, and a plurality of clamp means 8 are provided in an opening side of a forming metal mold 1.

The drive apparatus 8b of the clamp means 8 is connected to a pressure supply source via a conduit pipe 8e, is actuated by an air supply, rotates the shaft portion 8c via the link mechanism so as to change a direction of the pressing portion 8d, and moves the shaft portion 8c downward so as to move downward the pressing portion 8d and press the pressing portion 8d to the opening peripheral edge portion of the forming metal mold 1.

The skin material holding frame 2 is hanged from the frame 7 via the rod 2a, and an elevating apparatus 9 constituted by an air cylinder connected to the rod 2a. The elevating apparatus 9 is connected to a pressure supply source (an air supply source in the present embodiment), and is actuated by the air supply so as to expand and contract the rod 2a, thereby freely elevating the skin material holding frame 2.

In this case, since the structure is made such that a front side of the skin material holding frame 2 is directed further upward at a time when the skin material holding frame 2 is ascended to the topmost portion so as to be retracted after the heating of the skin material 10 is finished, it is possible to secure a wider working space in a vertical direction. Accordingly, it is preferable that the rod 2a is provided, for example, in front and rear and right and left sides, totally four positions of the skin material holding frame 2, and the rods 2a positioned in the front side are further ascended at a time when the skin material holding frame 2 is ascended to the topmost portion.

The heater 3 is structured such as to heat and soften the skin material 10 before the skin material 10 is evacuated. The skin material 10 becomes soft by heating the skin material 10 by the heater 3, and it is possible to well execute the forming by the forming metal mold 1.

The heater 3 is arranged so as to pinch the skin material holding frame 2 from a vertical direction. The heater 3 is structured such that a plurality of heating lamps 3c are arranged in a surface-shaped holding body 3a, and heat a forming surface of the forming metal mold 1 and the skin material 10 of the skin material holding frame 2 from a vertical direction.

The heater 3 is arranged in a slide frame (not shown), and is structured such as to move within the slide frame by using an air cylinder as a drive source so as to freely move forward to an upper side of the forming metal mold 1 and backward therefrom.

In this case, the slide mechanism moves the heater 3 forward and backward, for example, by sliding a roller arranged in the heater 3 side along a rail in the slide frame side. In this case, it is preferable that a stopper is provided in an end portion of the rail so as to stop the movement of the heater 3 at a time when the roller of the heater 3 comes to the position of the stopper.

The pressurizing means 4 is hanged from the frame 7 via a rod 4a, and an elevating apparatus 9 constituted by an air cylinder connected to the rod 4a. The pressurizing means 4 is structured, in the same manner as the skin material holding frame 2 mentioned above, such as to freely elevate on the forming metal mold 1 on the basis of an operation of the elevating apparatus 9 and pressurize the constituting members of the seat S for the vehicle arranged in the forming metal mold 1.

In this case, in the present embodiment, the description is given of the skin material holding frame 2, the heater 3, the pressurizing means 4 and the clamp means 8, as the structures actuated by the air cylinder, however, the structure is not limited to this, but it goes without saying that the other drive mechanisms such as a hydraulic cylinder or the like may be employed.

The vacuum forming of the skin material 10 and the assembly of the seat S for the vehicle are executed by operating the manufacturing apparatus in accordance with a predetermined order. The operation of the manufacturing apparatus is executed in accordance with an automatic control or a manual control. In the case of the automatic control, a heating condition is monitored by a temperature sensor, or a processing time is measured by a timer, and each of the means is automatically operated on the basis of information from the sensor or the timer.

Further, in the case that the manufacturing apparatus is operated in accordance with the manual control, a control panel (not shown) is provided near the manufacturing apparatus, and each of the means is operated by turning on a plurality of switches on the control panel.

The switches are provided in correspondence to the forming metal mold 1, the skin material holding frame 2, the heater 3, the pressuring means 4 and the clamp means 8, and the structure is made such that each of the means can be operated and stopped by operating the switch. In this case, each of the means may be controlled from the operation start to the stop by using a timer.

First, the skin material 10 is set to the skin material holding frame 2 in a state in which the skin material holding frame 2 is moved toward downward.

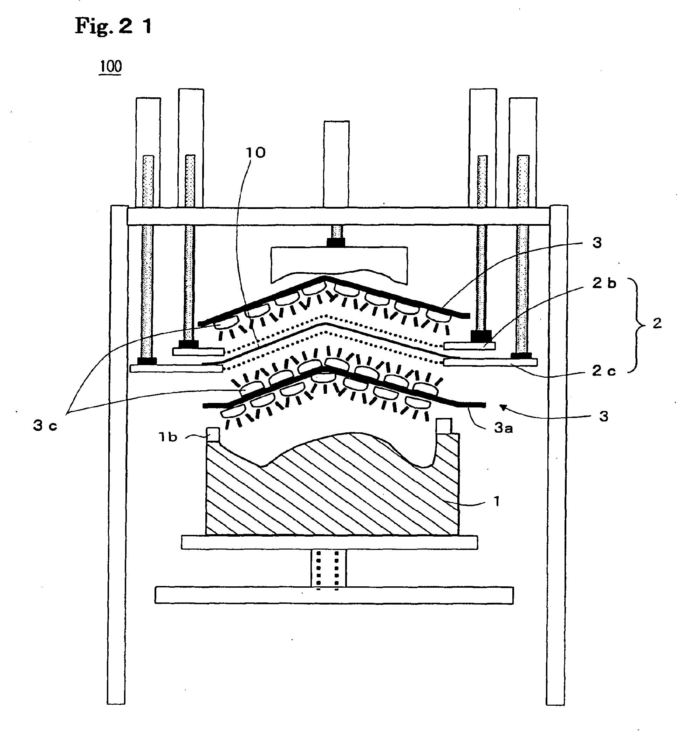

Next, as shown in Fig. 21, the skin material 10 is heated by the heater 3.

When the skin material is heated, the skin material holding frame 2 is next moved downward toward the forming metal mold 1. Further, the skin material forming frame 2 is fixed to the forming metal mold 1 by using the clamp means 8 or the like.

Further, the skin material 10 set to the forming metal mold 1 is evacuated.

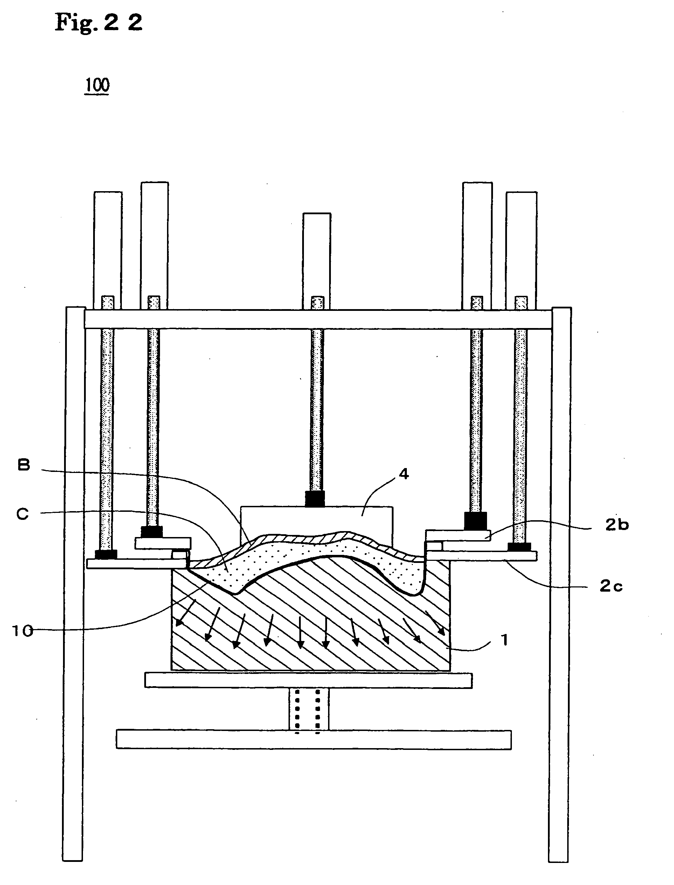

When the skin material 10 is formed, the cushion material C and the bottom plate B are mounted on the evacuated skin material 10, as shown in Fig. 22. Further, the pressure is applied from the bottom plate B side by means of the pressurizing means 4.

The clamp means 8 is released while the pressure is applied by the pressurizing means 4, and the skin material 10 is released from the skin material holding frame 2. Further, the terminal end portion of the skin material 10 is fixed to the bottom plate B by the staple or the like. At this time, if the forming metal mold 1 is structured such as to be tiltable and rotatable around the shaft 5a, the terminal treatment work can be easily executed and it is possible to improve a working efficiency. The pressuring means 4 pressurizing the cushion material C and the bottom plate B is moved upward at the end.

In the manufacturing apparatus 100 in accordance with the present embodiment, since the terminal treatment of the skin material 10 is executed while pressurizing by means of the pressurizing means 4, it is possible to attach the skin material 10 to the bottom plate B with a suitable tension, and it is possible to obtain the seat S for the vehicle having an improved outer appearance.

In this case, in the embodiment mentioned above, there is shown the structure in which the cushion material C and the bottom plate B are mounted and assembled after forming the skin material 10, however, the structure may be made such that skin material 10 and the cushion material C are integrally expansion formed by a raw material forming the cushion material C, a foaming agent and the like at the same time of forming the skin material 10 by the forming metal mold 1.

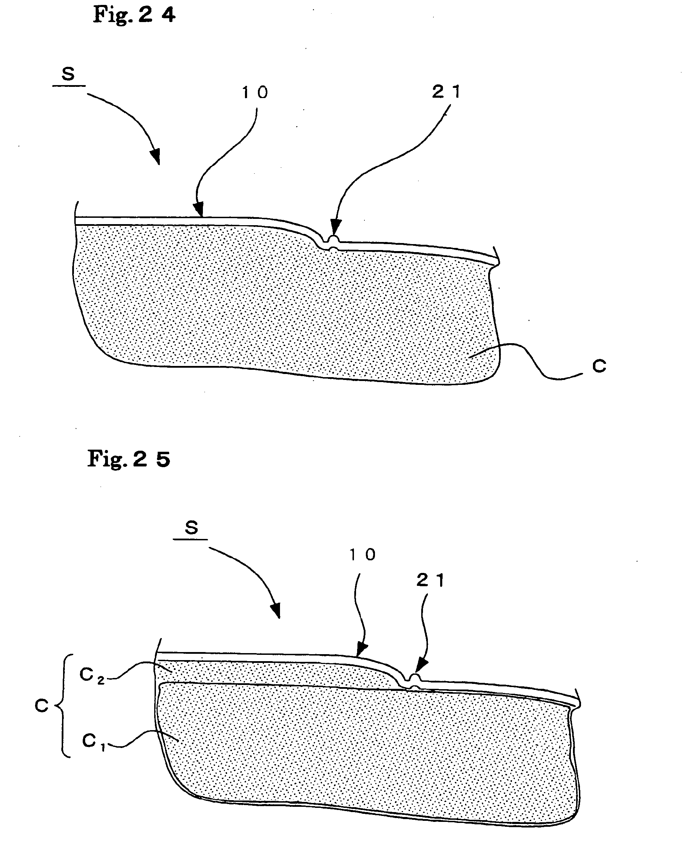

Fig. 24 shows an embodiment in which the skin material 10 and the cushion material C are integrally expansion formed by the raw material forming the cushion material, the foaming agent and the like at the same time of forming the skin material 10 by the forming metal mold 1.

Fig. 25 shows the other embodiment of the seat S for the vehicle in accordance with the integral expansion forming. In the embodiment shown in Fig. 25, a main cushion C1 and a sub cushion C2 are used as the cushion material C. The sub cushion C2 is formed so as to be arranged in one side skin material side on the boundary of the sewing thread pattern 21. In this case, the sub cushion C2 is first bonded to the main cushion C1 by an adhesive agent or the like, and the skin material 10 is bonded by the adhesive agent.

When using the sub cushion C2 as mentioned above, it is possible to express an irregular feeling in one side on the boundary of the sewing thread pattern 21, and it is possible to highlight the condition similar to the sewing more clearly. Further, in the case of the embodiment shown in Fig. 25, it is possible to form the skin material 10 by the forming metal mold 1, adhere the sub cushion C2 to the skin material 10, and thereafter integrally expansion form the skin material 10, the sub cushion C2 and the main cushion C1 by the raw material forming the main cushion C1, the foaming agent and the like.

In accordance with further the other embodiment, the skin material 10 is previously formed by the forming metal mold 1, and the sub cushion C2 is laminated on the skin material 10. Thereafter, the main cushion C1 can be integrally bonded by the adhesive agent, or an integral expansion forming can be applied to the skin material 10 laminated by the sub cushion C2, by the material forming the main cushion C1, or the like.

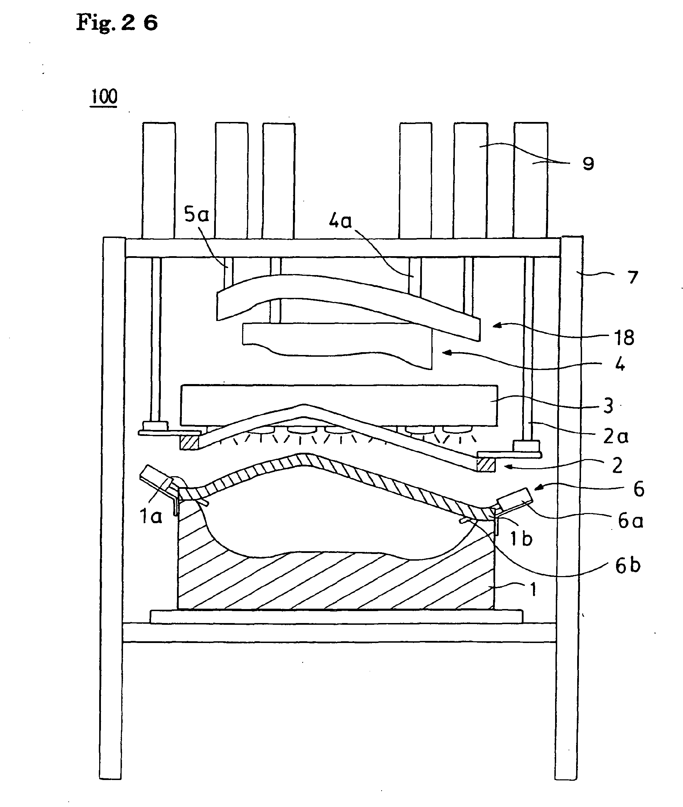

Figs. 26 to 29 show a manufacturing apparatus having further the other structures.

A manufacturing apparatus shown in Fig. 26 is provided with a heating means 18 for heating at least a part of a back surface side of the bottom plate B, a skin material interfolding means 6 for interfolding a terminal portion 11a of the skin material 10 to the back surface side of the bottom plate B, and a crimping means for crimping the back surface side of the bottom plate B and the terminal portion 11a of the skin material 10, in addition to the structures mentioned above.

The standing wall portion 1b is provided in the opening peripheral edge portion 1a of the forming metal mold 1. The standing wall portion 1b relates to the interfolding process of the skin material 10 together with the skin material interfolding means 6, and is provided in a standing manner in the opening peripheral edge portion 1a of the forming metal mold 1. The structure is made such that a portion forming a return margin at a time of returning and firmly contacting the terminal portion of the skin material 10 to the bottom plate B is positioned in the standing wall portion 1b. Accordingly, a desired return margin can be secured by adjusting a height of the standing wall portion 1b.

Further, a notch portion 1c for arranging the skin material interfolding means 6 mentioned below is provided at a predetermined interval in the standing wall portion 1b. The notch portion 1c is formed so as to freely arrange an extending portion 6b of the skin material interfolding means 6. The notch portion 1c is formed, for example, by notching the standing wall portion 1b at a predetermined width by a predetermined interval.

Accordingly, it is preferable that the standing wall portion 1b is formed by a raw material which can easily form the notch portion 1c or the like. As the raw material of the standing wall portion 1b, for example, a resin or a wood may be used.

The skin material holding frame 2 is structured such as to seal the skin material 10 all around the periphery of the forming metal mold 1, and is moved in a vertical direction in the upper side of the forming metal mold 1. The skin material holding frame 2 is formed in approximately the same shape as a shape of the opening peripheral edge portion 1a of the forming metal mold 1, that is, the upper surface of the standing wall portion 1b in the present embodiment, and is pressed to the opening peripheral edge portion 1a of the forming metal mold 1. The skin material holding frame 2 is closely contacted with the opening peripheral edge portion 1a of the forming metal mold 1, and is structured such as to pinch and fix the skin material 10 with respect to the opening peripheral edge portion 1a of the forming metal mold 1.

As the heating means 18 of the bottom plate B, in accordance with the present embodiment, there is employed a heating body having a frame shape conforming with the peripheral edge shape of the bottom plate B. The heating means 18 is hanged from the frame 7 via a rod 18a, and an elevating apparatus 9 constituted by an air cylinder connected to the rod 18a.

The heating means 18 is structured such as to freely elevate on the forming metal mold 1 on the basis of an operation of the elevating apparatus 9 in the same manner as the skin material holding frame 2 and the pressurizing means 4 mentioned above, move downward until the heating means 18 is brought into contact with the back surface side of the bottom plate B arranged in the forming metal mold 1 and heat a predetermined position on the back surface of the bottom plate B.

A description will be given here of a particular structure of the heating means 18 of the bottom plate. As the heating means 18, an electric heating deposition device, a hot air deposition device and a hot wire are used. In the present embodiment, the electric heating deposition device is used as the heating means 18.

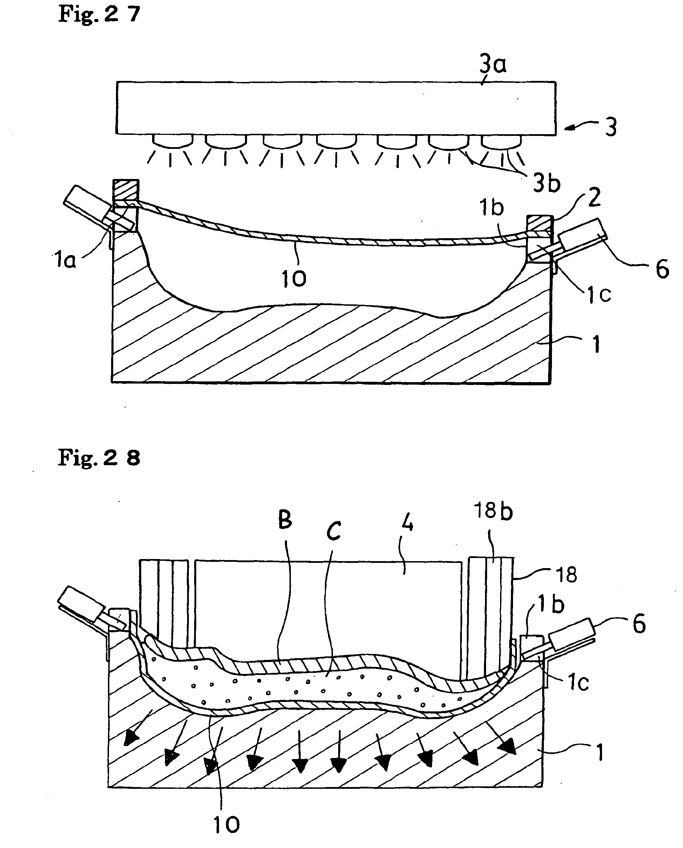

The electric heating deposition device serving as the heating means 18 is structured such as to be provided with a heating portion 18b having a heater built-in, as shown in Fig. 28. The heating portion 18b is made of a metal having a high thermal conductivity, and is formed, for example, by an aluminum. Further, the structure is made such that the heater incorporated in the heating portion 18b generates heat, thereby heating an object brought into contact with the heating portion 18b.

In this case, a molten material of a non-heated material is hard to be attached to the heating portion 18b by arranging a non-deposited film such as a fluorine contained resin or the like in the heating portion 18b, and this structure is preferable. Further, even in the case that the molten material is attached, it is possible to easily remove the molten material.

In this case, the heating means 18 may be formed in a shape obtained by separating the frame shape, in addition to the frame shape conforming with the peripheral edge shape of the bottom plate B as mentioned above. In the case that the heating means 18 is formed in the separated shape as mentioned above, the shape of each of the heating means 18 may be formed variously. The shape of each of the heating means 18 is formed, for example, in a rectangular cross sectional shape, a circular cross sectional shape, an oval cross sectional shape, a polygonal cross sectional shape and the like.

Since the structure is made as mentioned above, the heating can be executed all around the periphery of the peripheral edge end portion of the bottom plate B without any time difference by the heating means 18. Since the heating is executed all around the periphery of the peripheral edge end portion of the bottom plate B without any time difference, it is possible to uniformize the state of the molten resin, and it is possible to uniformly infiltrate the molten resin into the fiber base material layer 12 of the skin material 10 in a later step.

In addition to the structure mentioned above, the structure may be made such that a plurality of electric heating deposition devices are arranged in conformity to the shape of the peripheral edge end portion of the bottom plate B. In this case, a plurality of electric heating deposition devices move toward the bottom plate B without any time difference, and execute a control such that the heating operation can be executed.

The hot air type deposition device is conventionally known, and is structured such as to be provided with a hot air injecting nozzle, and a hot air source connected to the nozzle via a duct. When the hot air type deposition device is operated, the hot air delivered from the hot air source is injected from the nozzle through the duct. Further, the hot air injected from the nozzle is applied to a predetermined position of the bottom plate B, and the heating is executed.

In the case of using the hot air type deposition device, it is preferable that the heating can be executed all around the periphery of the peripheral edge end portion of the bottom plate B without any time difference in the same manner as the case of using the electric heating deposition device.

Accordingly, for example, a plurality of hot air injecting nozzles are arranged in the frame body having the same shape as the peripheral edge end portion of the bottom plate B, and the control is executed such that the hot air is approximately simultaneously injected from the hot air injecting nozzles.

Alternatively, the hot wire may be used as the heat generating body. The hot wire is arranged along the peripheral edge end portion of the bottom plate B. Further, it is possible to approximately simultaneously heat all the periphery of the peripheral edge end portion of the bottom plate B by energizing the hot wire.

In this case, with respect to the hot wire, it is preferable that the coating film of the fluorine contained resin or the like is applied thereto in the same manner as the heating portion 18b of the electric heating deposition device. Accordingly, the molten resin or the like of the bottom plate B is hard to be attached, and even if the molten resin or the like is attached, the molten resin can be easily removed, so that the structure is preferable.

As mentioned above, the resin melting portion is formed in the bottom plate B by heating the bottom plate B by means of the heating means 18. The resin melting portion is provided along the peripheral edge end portion of the bottom plate B.

The resin melting portion may be provided at a plurality of positions by a predetermined interval along the peripheral edge end portion of the bottom plate B, or may be continuously provided in a band shape without any predetermined interval. Further, the structure may be made such that the band-like resin melting portion is provided in two rows or two or more rows.

In this case, the place in which the resin melting portion is formed is not limited to the peripheral edge end portion of the bottom plate B, but may be set to the back side surface of the seat surface portion of the bottom plate B. In this case, the resin melting portion may be provided in both of the peripheral edge end portion of the bottom plate B and the back side surface of the seat surface portion. Accordingly, the terminal portion of the skin material 10 can be bonded to both of the peripheral edge end portion of the bottom plate B and the back side surface of the seat surface portion, and it is possible to obtain a high bonding property.

At this time, the skin material 10 can be bonded to a boundary portion between the peripheral edge end portion and the back side surface of the seat surface portion by continuously forming the resin melting portion of the peripheral edge end portion side and the resin melting portion of the back side surface side of the seat surface portion, and it is possible to bond the skin material 10 and the bottom plate B with a high closely contacting property.

The heating means 18 is moved downward so as to be brought into contact with the bottom plate B as shown in Fig. 28 while applying the pressure by the pressurizing means 4, and the resin in the peripheral edge end portion in the back surface side of the bottom plate B is molten. The heating is executed until the front surface of the bottom plate B reaches a temperature between 200 and 210°C.

When the bottom plate B is heated, whereby the resin melting portion is provided, the heating means 18 is drawn upward. Further, the skin material interfolding means 6 is operated, and the terminal portion of the skin material 10 is interfolded into the bottom plate B side and is attached to the heated portion of the bottom plate B.

The skin material interfolding means 6 in accordance with the present embodiment is provided at a plurality of positions by a predetermined interval in the forming metal mold 1. The skin material interfolding means 6 is structured such as to be provided with a base portion 6a fixed to the forming metal mold 1, and an extending portion 6b extending from the base portion 6a.

In other words, the terminal portion of the skin material 10 becomes in a state of extending along the standing wall portion 1b, in a stage that the heating of the bottom plate B is finished. When the terminal portion of the skin material 10 is in the state of extending along the standing wall portion 1b as mentioned above, the extending portion 6b of the skin material interfolding means 6 passes through the notch portion 1c of the standing wall portion 1b on the basis of a power of the air cylinder, and moves to the forming metal mold 1 side.

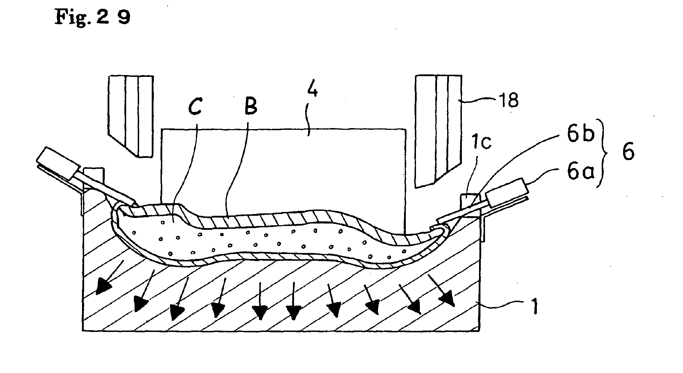

Accordingly, the terminal portion of the skin material 10 is pressed to the forming metal mold 1 side, and the terminal portion is returned as shown in Fig. 29. In this case, at this time, the pressure is continuously applied to the cushion material C and the bottom plate B by the pressing means 4.

When the terminal portion of the skin material 10 is returned by the skin material interfolding means 6, and is arranged so as to lap over the resin melting portion, the pressure application to the terminal portion of the skin material 10 is next executed. In the present embodiment, the pressurizing is executed by again moving downward the heating means 18 having a sufficiently lowered temperature toward the bottom plate B.

The fiber base material layer 12 of the skin material 10 is crimped to the resin melting portion by the pressure application. A fabric material structuring the fiber base material layer 12 of the skin material 10 is constituted by a knitted fabric or a woolie finished product, and is structured such as to have a space between the fibers. The fiber base material layer 12 is crimped to the resin melting portion, whereby the molten resin obtained by the melting of the peripheral edge portion of the bottom plate B is infiltrated.

At this time, the heating means 18 having the sufficiently lowered temperature is brought into contact with the terminal portion 11a of the skin material 10, whereby the terminal portion 11a of the skin material 10 is cooled, and the molten resin infiltrated into the fiber base material layer 12 of the skin material 10 is solidified.

As mentioned above, the molten resin infiltrated into the fiber base material layer 12 of the skin material 10 is solidified, and the fiber base material layer 12 and the bottom plate B are infiltrated into the fiber base material layer 12, and are integrally formed via the solidified resin. In the manner mentioned above, the terminal portion of the skin material 10 is fixed to the peripheral edge end portion of the bottom plate B.

The pressurizing means 4 pressurizing the cushion material C and the bottom plate B is moved upward at the end. As mentioned above, in the manufacturing apparatus S in accordance with the present embodiment, since the terminal treatment of the skin material 10 is executed while pressurizing by the pressurizing means 4, it is possible to attach the skin material 10 to the bottom plate B with a suitable tension, and it is possible to obtain the seat for the vehicle having the improved outer appearance.

### Industrial Applicability

As mentioned above, in accordance with the present invention, since the predetermined shape having the outer appearance equal to the joint portion obtained by actually bonding in accordance with the sewing or the welding process, the sewing thread and the like is formed in the one-piece skin material in accordance with the transcription, whereby there is formed the outer appearance equal to the three-dimensional outer appearance obtained by actually bonding a plurality of skin materials in accordance with the sewing or the welding process, the outer appearance shape is not deformed even in the case that the seat is manufactured by coating the cushion material, and it is possible to obtain the skin material for the vehicle and the seat for the vehicle, which are provided with the outer appearance equal to the seat covered with the skin material assembly actually manufactured in accordance with the sewing or the like, and have the high-class feeling. Further, since the skin material is constituted by one piece, the rain water does not make an intrusion into the seat even in the case that the skin material is used in the seat for the outdoor vehicle, and the structure is preferable.

Further, since the foam material is laminated on the back surface of the skin material, and the seat surface concavo-convex shape is simultaneously formed, it is possible to form the outer appearance in which the convex portion on the front surface is plump, and it is possible to reproduce the three-dimensional outer appearance by highlighting the concavo-convex shape of the front surface more clearly.

Further, since the sewing pattern is applied in accordance with the transcription, it is possible to inexpensively obtain the skin material having the high-class feeling. Further, since the transcription is employed, it is possible to appropriately change the sewing pattern and the grain pattern, and it is possible to correspond to the various designs.

## Claims

1. A skin material (10) for a vehicle seat, wherein a general surface (16) and a predetermined shape having an outer appearance which is equal to a joint portion obtained by actually bonding a plurality of skin materials are formed three-dimensionally in a one-piece skin material in accordance with a transcription, **characterized in that** said joint portion is structured as at least one of a sewing thread pattern (21), or a joint portion pattern (23), each having an outer appearance which is equal to a three-dimensional outer appearance obtained by actually bonding a plurality of overlapping skin materials and each of said patterns (21, 23) are formed in a shape protruding from the general surface (16) and are provided with an undercut portion (25) at the base.

2. A skin material for a vehicle seat as claimed in claim 1, wherein the skin material is provided with a form material (10b) arranged in the other portions than said joint portion in a back surface of the skin material and forming a seat surface concavo-convex shape.

3. A skin material for a vehicle seat as claimed in claim 1, wherein the joint portion having the outer appearance equal to the outer appearance obtained by actually bonding said plurality of skin materials is constituted by any one of a joint in accordance with a welding process and an ornamental stitch portion provided in the skin material surface.

4. A skin material for a vehicle seat as claimed in claim 1, wherein said skin material is structured such that all or a part of a shape of a seam hole (22), and a shape showing a biting state of a sewing thread into the skin material (24) are transcribed.

5. A skin material for a vehicle seat as claimed in claim 1, wherein the different outer appearances are provided on the boundary of said joint portion.

6. A skin material for a vehicle seat as claimed in claim 2, wherein the back surface material (10c) is arranged in said form material(10b) and said form material(10b) is pinched by said back surface material (10c) and said skin material(10a).

7. A skin material for a vehicle as claimed in claim 3, wherein said ornamental stitch portion is constituted by a pattern portion.

8. A seat for a vehicle, wherein the seat is covered with a skin material according to any one of claims 1 to 7.

## Patentansprüche

1. Außenhautmaterial (10) für einen Fahrzeugsitz, wobei eine Hauptfläche (16) und eine vorgegebene Form mit einem äußeren Erscheinungsbild, das einem Verbindungsabschnitt entspricht, der entsteht, indem eine Vielzahl von Außenhautmaterialien tatsächlich verbunden werden, bei einer Übertragung dreidimensional in einem aus einem Stück bestehenden Außenhautmaterial ausgebildet werden, **dadurch gekennzeichnet, dass** der Verbindungsabschnitt wenigstens als ein Nähfaden-Muster (21) oder ein Nahtstellen-Muster (23) strukturiert ist, die jeweils ein äußeres Erscheinungsbild haben, das einem dreidimensionalen äußeren Erscheinungsbild entspricht, das entsteht, wenn eine Vielzahl überlappender Außenhautmaterialien tatsächlich verbunden werden, und alle der Muster (21, 23) in einer Form ausgebildet sind, die von der Hauptfläche (16) vorsteht, und mit einem Unterschneidungsabschnitt (25) an der Basis versehen sind.

2. Außenhautmaterial für einen Fahrzeugsitz nach Anspruch 1, wobei das Außenhautmaterial mit einem Formmaterial (10b) versehen ist, das in anderen Abschnitten als dem Verbindungsabschnitt an der Rückseite des Außenhautmaterials angeordnet ist und eine konkavkonvexe Form der Sitzfläche bildet.

3. Außenhautmaterial für einen Fahrzeugsitz nach Anspruch 1, wobei der Verbindungsabschnitt, dessen äußeres Erscheinungsbild dem äußeren Erscheinungsbild gleicht, das entsteht, wenn die Vielzahl von Außenhautmaterialien tatsächlich verbunden werden, durch eine Naht, wie sie einem Schweißvorgang entspricht, oder einen Ziernahtabschnitt in der Oberfläche des Außenhautmaterials gebildet wird.

4. Außenhautmaterial für einen Fahrzeugsitz nach Anspruch 1, wobei das Außenhautmaterial so aufgebaut ist, dass eine Form eines Nahtlochs (22) und eine Form, die einen Zustand des Einschneidens eines Nähfadens in das Außenhautmaterial (24) zeigt, ganz oder teilweise übertragen werden.

5. Außenhautmaterial für einen Fahrzeugsitz nach Anspruch 1, wobei verschiedene äußere Erscheinungsformen an der Grenze des Verbindungsabschnitts erzeugt werden.

6. Außenhautmaterial für einen Fahrzeugsitz nach Anspruch 2, wobei das Material (10c) der Rückseite in dem Formmaterial (10b) angeordnet ist und das Formmaterial (10b) durch das Material (10c) der Rückseite und das Außenhautmaterial (10a) eingeklemmt wird.

7. Außenhautmaterial für einen Fahrzeugsitz nach Anspruch 3, wobei der Ziernahtabschnitt durch einen Musterabschnitt gebildet wird.

8. Sitz für ein Fahrzeug, wobei der Sitz mit einem Außenhautmaterial nach einem der Ansprüche 1 bis 7 abgedeckt ist.

## Revendications

1. Matière de revêtement (10) pour un siège de véhicule, dans laquelle une surface générale (16) et une forme prédéterminée présentant une apparence extérieure qui ressemble à une partie de jointure obtenue en liant réellement plusieurs matières de revêtement sont formées de façon tridimensionnelle dans une matière de revêtement d'une seule pièce selon une transcription, **caractérisée en ce que** ladite partie de jointure est structurée comme au moins l'un d'un motif de fil à coudre (21), ou d'un motif de partie de jointure (23), chacun présentant une apparence extérieure qui ressemble à une apparence extérieure en trois dimensions obtenue en liant réellement plusieurs matières de revêtement se chevauchant et chacun desdits motifs (21, 23) est formé en une forme dépassant de la surface générale (16) et est muni d'une partie en contre-dépouille (25) au niveau de la base.

2. Matière de revêtement pour un siège de véhicule selon la revendication 1, dans laquelle la matière de revêtement est munie d'une matière de forme (10b) agencée dans les parties autres que ladite partie de jointure dans une surface arrière de la matière de revêtement et formant une surface de siège de forme concavo-convexe.

3. Matière de revêtement pour un siège de véhicule selon la revendication 1, dans laquelle la partie de jointure présentant l'apparence extérieure ressemblant à l'apparence extérieure obtenue en liant réellement lesdites matières de revêtement est constituée par l'une quelconque d'une jointure selon un processus de soudure et d'une partie de point de couture ornementale réalisée dans la surface de matière de revêtement.

4. Matière de revêtement pour un siège de véhicule selon la revendication 1, dans laquelle ladite matière de revêtement est structurée de sorte que tout ou partie d'une forme d'un trou de couture (22) et une forme représentant un état piqué d'un fil à coudre dans la matière de revêtement (24) sont transcrites.

5. Matière de revêtement pour un siège de véhicule selon la revendication 1, dans laquelle les différentes apparences extérieures sont réalisées sur la frontière de ladite partie de jointure.

6. Matière de revêtement pour un siège de véhicule selon la revendication 2, dans laquelle la matière de surface arrière (10c) est agencée dans ladite matière de forme (10b) et ladite matière de forme (10b) est pincée par ladite matière de surface arrière (10c) et ladite matière de revêtement (10a).

7. Matière de revêtement pour un véhicule selon la revendication 3, dans laquelle ladite partie de point de couture ornementale est constituée par une partie à motif.

8. Siège pour un véhicule, dans lequel le siège est recouvert d'une matière de revêtement selon l'une quelconque des revendications 1 à 7.
